# EUROPEAN PATENT SPECIFICATION

(11) **EP 4 374 314 B1**
(45) Date of publication and mention of the grant of the patent: **09.09.2026**
(21) Application number: 22755139.7
(22) Date of filing: 22.07.2022
(51) Int. Cl.: G06T 7/00, G06T 7/10, G06T 7/11, G06T 7/20

(54) **SIGNAL EXTRACTION FROM CAMERA OBSERVATION**
SIGNALEXTRAKTION AUS KAMERABEOBACHTUNG
EXTRACTION DE SIGNAUX À PARTIR D'UNE OBSERVATION PAR CAMÉRA

(30) Priority: 23.07.2021 EP 21187369
(43) Date of publication of application: 29.05.2024
(73) Proprietor: Koninklijke Philips N.V., 5656 AE Eindhoven (NL)
(72) Inventor: WANG, Wenjin, 5656 AG Eindhoven (NL); DEN BRINKER, Albertus Cornelis, 5656 AG Eindhoven (NL); GARCIA TORMO, Albert, 5656 AG Eindhoven (NL); PAPPOUS, Ioannis, 5656 AG Eindhoven (NL); WEISS, Steffen, 5656AG Eindhoven (NL); WUELBERN, Jan Hendrik, 5656AG Eindhoven (NL); MAZURKEWITZ, Peter Caesar, 5656AG Eindhoven (NL); SENEGAS, Julien Thomas, 5656AG Eindhoven (NL); NETSCH, Thomas, 5656AG Eindhoven (NL)
(74) Representative: Philips Intellectual Property & Standards
(86) International application number: PCT/EP2022/070572
(87) International publication number: WO 2023/001997

(56) References cited:
- EP-A1- 3 581 109
- EP-A1- 3 816 646
- WO-A1-2019/068185
- US-A1- 2011 230 755
- WIM VERKRUYSSE ET AL: "Remote plethysmographic imaging using ambient light", OPTICS EXPRESS, vol. 16, no. 26, 22 December 2008 (2008-12-22), pages 21434, XP055193251, DOI: 10.1364/OE.16.021434
- KRUG JOHANNES W. ET AL: "Contactless respiratory monitoring system for magnetic resonance imaging applications using a laser range sensor", vol. 2, no. 1, 1 September 2016 (2016-09-01), pages 719 - 722, XP055876546, Retrieved from the Internet <URL:https://www.researchgate.net/profile/Michael-Friebe/publication/311422068_Contactless_respiratory_monitoring_system_for_magnetic_resonance_imaging_applications_using_a_laser_range_sensor/links/594d644745851543382a7dcb/Contactless-respiratory-monitoring-system-for-magnetic-resonance-imaging-applicati> [retrieved on 20220107], DOI: 10.1515/cdbme-2016-0156

## Description

### FIELD OF THE INVENTION

The present invention relates to the field of image processing, and particularly for inferring a signal indicative of a subject's state, for example for use in combination with diagnostic imaging. More specifically, the invention relates to a device, method and computer program product for determining a signal indicative of the state of a subject, e.g. a patient undergoing a medical imaging procedure, based on remote observation, e.g. camera images of the subject.

### BACKGROUND OF THE INVENTION

It is known in the art to use camera observation of a subject in order to derive useful signals, such as signals indicative of physiological parameters and/or mood of a subject undergoing a medical imaging examination. Examples include camera-based methods to determine parameters indicative of cardiovascular and/or respiratory function and of movement of the body or parts thereof.

For example, cardiac triggering is extensively used in medical imaging, such as magnetic resonance imaging (MRI) and computed tomography (CT). Data acquired by a diagnostic imaging scanner may be collected over a time period that is not negligible with respect to motion of the body or parts thereof due to physiological functions. For example, in brain or heart imaging (without limitation), the data acquisition process, i.e. in which raw imaging data is acquired by a scanner, may take substantially longer than a cardiac cycle. However, the acquired data may be post-processed to generate high-quality tomographic reconstruction images (e.g. for diagnostic purposes). In order to generate high quality images, such as medical images to be provided to a physician to aid in diagnosis, it is desirable to reduce the effect of cardiac motion, which could otherwise lead to motion-related artefacts in the reconstructed images. If information is available about the cardiac cycle at the time of data acquisition, the raw data can be sorted according to cardiac phase, data from the cycle that are not interest can be discarded, and/or a suitable motion correction can be applied.

Cardiac synchronization is typically, as known in the art, achieved by taking triggers into account that are generated from an electrocardiogram (ECG) signal, e.g. using contact electrode sensors. For example, the R-peak of the ECG signal, which indicates the start of the systolic phase (start of heart muscle contraction), may be used to generate a trigger for synchronization. Knowledge of the R-peak provides accurate knowledge for the reliable gating of the MRI scan such that movement artefacts can be reduced as much as possible.

However, contact measurements using ECG require electrode patches on the body, which may be uncomfortable to the subject and requires time for experienced personnel to attach the sensors and set prepare the signal acquisition. Thus, an efficient workflow can be negatively affected by such approach. Furthermore, imaging procedures that rely on high field strengths (e.g. using the magneto-hydrodynamic effect) can distort the ECG signal, which reduces the reliability of, or even the feasibility of, R-peak detection in the signal. Another disadvantage of this approach is a risk of contamination, e.g. of bacterial or viral nature, via the skin-contact sensors.

For retrospective triggering, or list-mode triggering, the acquisition of a separate cardiac navigator echo can also be incorporated in a recorded MRI sequence. For direct cardiac triggering (prospective triggering), a fiber-optic stethoscope can be used, or ballistographic devices can be attached to the chest. PPG measurement at the extremities is also known in the art, but again requires wires to be run to the patient, and an uncertainty may exist in the timing of the PPG signal with respect to an ECG signal. Nonetheless, this approach can be used in a retrospective mode.

Contactless cardiac pulse detection using camera observation may thus offer advantages in the context of cardiac triggered imaging examinations, e.g. in CT or MRI, such as a facilitated workflow and reduced sensitivity to strong fields.

Camera-based approaches are known in the art to obtain useful signals, e.g. to eliminate on-body sensors for respiration gating. For example, movement of the chest can be observed to determine the respiratory state. However, a need still exists in the art for methods to achieve, e.g. in combination, a comfortable and hassle-free measurement (for patient and personnel, e.g. to simplify the workflow) and a reliable cardiac gating. Preferably, a gating signal obtained by such method would be characterized by a strong correlation with specific features in the ECG cycle, e.g. the R-peak, to be usable in both prospective and retrospective modes. Camera-based PPG (which may also be referred to as video PPG or remote PPG) has been proposed as a promising technique, but requires a good setup and adequate processing to deliver good results.

Unlike a conventional sensor-based measurement, e.g. a one-dimensional ECG as function of time, imaging data captured by a camera comprises three-dimensional information, e.g. pixel intensities in two spatial dimensions and changes thereof in time. In addition to signal processing techniques, image processing methods are therefore used to obtain a one-dimensional signal of interest, e.g. a PPG signal for cardiac trigger generation.

For example, WO 2015/117084 A1 discloses an approach to detect cardiac and respiratory signals during an MRI examination, using a video camera and active illumination. Small intensity changes and motion information are extracted from the video data, e.g. as acquired by the camera at a rate of 30 frames per second. A mean pixel value is calculated over the entire frame, or an over predetermined subsections of the image, after which a pass band filter is applied (e.g. passing frequencies between 0.6 Hz and 10 Hz).to obtain a signal representative of the cardiac cycle. Furthermore, one-dimensional subpixel image registration is used in the inferior/superior direction to detect a slight nodding motion, which is filtered with a further pass band filter (0.2 Hz to 0.6 Hz) to obtain a signal representative of the respiratory cycle.

As a further example, US 8,542,877 B2 discloses another method of processing a video sequence. The camera settings, such as exposure time, acquisition rate and gain, are in a calibration phase automatically adjusted to maximize the magnitude of fluctuations in average brightness in the image. A segmentation method is applied to recognize and identify the face (or other body part of interest) in the video to allow this region of interest, e.g. the face, to be tracked through the sequence of images. In the region of interest, one or more measurement zones can be determined, e.g. as contiguous zones showing minimal (spatial) gradient variations in that zone. For example, this measurement zone can be determined in a reference image of the sequence, such that the position of image points in the measurement zone can be tracked through the sequence by using its relative position within the segmented region of interest. Thus, a time-varying signal, e.g. an average brightness, can be extracted for each measurement zone, which renders, e.g. after filtering, the signal of interest.

WO2019/068185A1 discloses an imaging system in which a mirror is employed by to display images to a patient and images of parts of the patient (or fiducials) to a camera.

EP 3581109A1 discloses a mirror positioned in the bore of an imaging scanner so that a flange mounted camera is able to image a facial region of the subject.

### SUMMARY OF THE INVENTION

It is an object of embodiments of the present invention to provide in good and efficient means and methods for determining a signal indicative of the state of a subject, e.g. a patient undergoing a medical imaging procedure, based on remote observation, e.g. camera images of the subject.

It is an advantage of embodiments of the present invention that a useful signal can be determined (e.g. automatically and/or algorithmically) from camera observation of a subject, such as signals indicative of physiological parameters (e.g. a signal indicative of cardiovascular or respiratory function, motion, alertness, motion etc.) and/or mood of a subject undergoing a medical imaging examination.

It is an advantage of embodiments of the present invention that a signal can be determined from camera observation that can be used for cardiac triggering in a diagnostic imaging procedure using a scanner system, such as an MRI, CT, SPECT or PET scanner, e.g. to collate, correct and/or annotate the collected data ,or images reconstructed therefrom, with the determined signal and/or to control the image scan process as dependent on the signal. Such trigger signal may also be used in, for example, radiotherapy and similar (e.g. therapeutic) procedures, e.g. are not necessarily strictly limited to medical imaging applications.

It is an advantage of embodiments of the present invention that a signal indicative of a state of a subject, e.g. related to physiological function such as a PPG signal, can be determined without direct contact with the subject. For example, cardiac synchronization (e.g. by a signal indicative or approximative of the occurrence in time of the R-peak in an ECG signal) can be achieved without requiring contact electrodes for recording an ECG signal. By avoiding the need for contact electrodes or other contact sensors, comfort to the subject being monitored can be increased, and a procedure can be performed more efficiently, e.g. avoiding a loss of time in applying and configuring such contact sensors. Camera-based signal generation can furthermore be substantially automated, thus potentially reducing a need for training and/or experience of staff. For example, contact sensors may need to be precisely positioned on the body and/or in a prescribed manner, and/or may require subject-specific calibration and/or configuration before use. By avoiding or reducing skin contact with a patient during a procedure, a risk of biological contamination can also be reduced, e.g. a risk of viral and/or bacterial contamination.

It is an advantage of embodiments of the present invention that a cardiac trigger, or signal suitable for use in cardiac gating or synchronization, can be obtained during a procedure that requires high field strengths, e.g. using the magneto-hydrodynamic effect, without interfering (e.g. distorting) with the signal acquisition. For example, a camera can be used that is positioned at a substantial distance from the subject under observation in an MRI scanner.

It is an advantage of embodiments of the present invention that a relevant signal, e.g. indicative of an ECG or PPG feature, can be reliably and accurately determined from camera images, even under suboptimal imaging conditions. For example, a sufficiently high temporal resolution and temporal accuracy can be obtained to provide a signal that can be used, e.g. in near real-time, for gating or other control purposes. A trigger signal can thus be provided in near real-time. A signal can be provided that is robust against, or at least has an advantageously low sensitivity to, movement of the subject, e.g. to patient motion. An approach in accordance with embodiments may advantageously be able to cope with poor imaging conditions, such as poor lighting and/or a suboptimal viewing angle. This may be particularly relevant for use cases in MRI, e.g. when a subject is observed from outside a magnet bore (e.g. using a camera on or integrated in a flange of the bore) and/or via a mirror. Furthermore, the wavelength used for the camera imaging may be constrained to a less than ideal range, and/or the subject may be in a less than ideal position and/or posture.

It is an advantage of embodiments of the present invention that a signal can be generated that can be used for retrospective (or list-mode) triggering and/or prospective (or direct) triggering.

It is an advantage of embodiments of the present invention that multi-processing or parallel processing techniques can be used for the image and signal processing to deliver a signal with only a small delay.

It is an advantage of embodiments of the present invention that a signal extraction area in the acquired camera image(s) is (e.g. automatically) determined in an efficient manner from which information can be extracted to generate the signal, e.g. an area is determined that contains useful information for triggering. This can advantageously limit the required processing power and time.

A method, device, system and computer program product in accordance with embodiments of the present invention achieves the above objective.

In a first aspect, the present invention relates to a method for determining a signal indicative of a state of a subject during a diagnostic imaging procedure based on remote camera observation. The method comprises acquiring camera images from a camera configured to monitor a body part of the subject during the examination or intervention via a reflection thereof in a reflective surface. For example, the body part may have a known or presumable spatial relationship to the reflective surface in the image, e.g. inside the contour of the reflective surface when the body part is reflected by the reflective surface onto the camera or at a known relative position (and/or orientation) with respect to the reflective surface, e.g. at an at least approximatively known distance (possibly relative to the size of the reflective surface in the image) below (or in another predetermined direction) with respect to the reflective surface.

The method comprises detecting a shape or contour of the reflective surface in at least one of the acquired camera images to define a region of interest in the image that contains image information corresponding to the body part of interest. The method comprises segmenting the detected region of interest in at least one of the acquired camera images to select pixels or one or more (sub)regions in the region of interest that correspond to a feature of the body part of interest. The method comprises determining the signal indicative of the state of the subject from the selected pixels or region, e.g. as function of time, by pixel intensity (or multi-dimensional, e.g. color, value) analysis, by dynamic analysis of the evolution of the observed pixels through time in multiple images acquired by the camera, by temporal frequency analysis and/or similar image and/or signal processing techniques.

In a method in accordance with embodiments of the present invention, detecting the shape or contour of the reflective surface, e.g. a mirror, may comprise a multi-scale search using a template of the reflective surface, in which a measure of correspondence is evaluated for a plurality of different candidate positions in the camera image and for a plurality of different scales of the template to identify a (e.g. optimal) correspondence in position and scale of the template to the camera image. For example, even though the appearance of the reflective surface (e.g. mirror) can be different in scale and location (and optionally orientation), it's shape, contour, aspect ratio and/or other such characteristics of appearance can be considered as (substantially) constant or invariant. This characteristic or characteristics can be represented by a template that is constructed to capture such aspects of the reflector. The template can thus be reused in the same system, e.g. for different imaging sessions, patients, ..., or can even be reproducible for different systems of the same generic configuration, e.g. using the same type of mirror(s) and/or the same camera system.

In a method in accordance with embodiments of the present invention, said template may be constructed (as part of the method, or obtained as independently determined in a calibration procedure) by acquiring a calibration image using the camera, cropping the calibration image to the size of the reflective surface in the image, and applying a high-frequency spatial kernel to suppress low-frequency context, in which the step of detecting the reflective surface may comprise applying said high-frequency spatial kernel (or a similar kernel) to the camera image before calculating said measure of correspondence. The template thus constructed may be applied at different scales of the image (e.g. using differently scaled versions of the template, or equivalently, by reciprocally scaling the imaging being searched or using a computational method that takes a scaling parameter or parameters directly into account), e.g. to match image content at different scales, e.g. in a hierarchical scale search.

In a method in accordance with embodiments of the present invention, detecting the reflective surface may take information regarding the positioning of the subject during the procedure into account as provided by a diagnostic imaging system for performing said procedure into account.

In a method in accordance with embodiments of the present invention, detecting the reflective surface may define the region of interest (e.g. a first image area), in which the region of interest comprises a first image area enclosed by the contour of the reflective surface and/or the region of interest (e.g. a second image area) where the body part is directly observable by the camera without reflection via the reflective surface by using a predetermined spatial relation of the second image area with respect to the reflective surface.

In a method in accordance with embodiments of the present invention, the segmentation may classify pixels in the camera image based on pixel intensity and/or may analyze a dynamic change of pixel intensity in a sequence of the camera images to determine whether a pixel or image region corresponds to the feature of the body part of interest.

A method in accordance with embodiments of the present invention may comprise determining motion of, or in, the body part between camera images acquired at different times, in which:
pixels in the region of interest for which motion is detected are excluded from the selection determined by the segmentation, and/or
said detected motion is used to register the selection determined by the segmentation on the basis of an image acquired earlier to account for a change in position and/or other spatial properties of the body part in the image, and/or
the segmentation and/or reflective surface detection is executed again when the detected motion exceeds a predetermined threshold or other criterion indicative of bulk motion.

In a method in accordance with embodiments of the present invention, the motion may be determined by an optical flow algorithm.

In a method in accordance with embodiments of the present invention, the diagnostic procedure may comprise imaging the subject by magnetic resonance imaging, computed tomography, positron emission tomography and/or single-photon emission computed tomography.

In a method in accordance with embodiments of the present invention, the body part may comprise the face or part thereof.

In a method in accordance with embodiments of the present invention, the camera may comprise an infrared camera, a monochrome camera operating in the visible wavelength range or part thereof, a color camera, and/or a multi-spectral camera.

In a method in accordance with embodiments of the present invention, the signal may be indicative of cardiac, cardiovascular and/or respiratory function of the subject.

In a method in accordance with embodiments of the present invention, the signal may be a photoplethysmography signal.

In a method in accordance with embodiments of the present invention, the signal may be indicative of a physiological state and/or parameter of the subject.

In a method in accordance with embodiments of the present invention, the signal may be used (as part of the method, or provided as output for external use) to gate a data acquisition by a system used for said diagnostic imaging procedure, and/or to sort, collate, select and/or annotate acquired image data by the diagnostic imaging system.

In a second aspect, the present invention relates to a device for determining a signal indicative of a state of a subject during a diagnostic imaging or therapeutic procedure based on remote camera observation. The device comprises an input for receiving camera images from a camera configured to monitor a body part of the subject during the diagnostic imaging or therapeutic procedure via a reflection thereof in a reflective surface. The device comprises an image feature detector for detecting a shape or contour of the reflective surface in at least one of the received camera images to define a region of interest in the image that contains image information corresponding to the body part of interest. The device comprises a segmenter for segmenting the detected region of interest in at least one of the acquired camera images to select pixels or one or more regions in the region of interest that correspond to a feature of the body part of interest. The device comprises a signal extractor to determine the signal indicative of the state of the subject from the selected pixels or region.

In a third aspect, the present invention relates to a diagnostic imaging system with an examination zone. The system comprises a camera for acquiring images from a subject when undergoing an examination while positioned in the examination zone. The system comprises a reflective surface, arranged in the examination zone, to reflect light (e.g. from a body part of the subject) onto the camera. The system comprises an image processor for determining a signal indicative of a state of the subject during the examination from the acquired camera image or images, in which the image processor comprises a device in accordance with embodiments of the second aspect of the present invention.

In a fourth aspect, the present invention relates to a computer-program product for performing a method in accordance with embodiments of the first aspect of the present invention when executed by a computing device, e.g. a computer or processor.

The independent and dependent claims describe specific and preferred features of the invention. Features of the dependent claims can be combined with features of the independent claims and with features of other dependent claims as deemed appropriate, and not necessarily only as explicitly stated in the claims.

### BRIEF DESCRIPTION OF THE DRAWINGS

FIG 1 shows an illustrative method in accordance with embodiments of the present invention.
FIG 2 shows a cropped camera image for use in calibration to generate a mirror template, in accordance with embodiments of the present invention.
FIG 3 shows a binary mask to identify mirror areas based on the template shown in FIG 2, in accordance with embodiments of the present invention.
FIG 4 shows cross-correlation maps in a multi-scale search for a mirror template in a camera image, for a situation in which a mirror assembly is positioned relatively close to the video camera, in accordance with embodiments of the present invention.
FIG 5 shows cross-correlation maps in a multi-scale search for a mirror template in a camera image, for a situation in which a mirror assembly is positioned relatively far away from the video camera, in accordance with embodiments of the present invention.
FIG 6 shows a comparison of an extracted photoplethysmography (PPG) signal, based on camera observation and determined by a method in accordance with embodiments of the present invention, with an electrocardiogram (ECG) that is simultaneously acquired.
FIG 7 shows an illustrative application of a method in accordance with embodiments.
FIG 8 shows a signal extracted from camera observation images, corresponding to the example shown in FIG 7, in accordance with embodiments of the present invention.
FIG 9 shows a device in accordance with embodiments of the present invention.
FIG 10 shows a system in accordance with embodiments of the present invention.

The drawings are schematic and not limiting. Elements in the drawings are not necessarily represented on scale. The present invention is not necessarily limited to the specific embodiments of the present invention as shown in the drawings.

### DETAILED DESCRIPTION OF EMBODIMENTS

Notwithstanding the exemplary embodiments described hereinbelow, is the present invention only limited by the attached claims. The attached claims are hereby explicitly incorporated in this detailed description, in which each claim, and each combination of claims as allowed for by the dependency structure defined by the claims, forms a separate embodiment of the present invention.

The word "comprise," as used in the claims, is not limited to the features, elements or steps as described thereafter, and does not exclude additional features, elements or steps. This therefore specifies the presence of the mentioned features without excluding a further presence or addition of one or more features.

In this detailed description, various specific details are presented. Embodiments of the present invention can be carried out without these specific details. Furthermore, well-known features, elements and/or steps are not necessarily described in detail for the sake of clarity and conciseness of the present disclosure.

In a first aspect, the present invention relates to a method for determining a signal indicative of the state of a subject, e.g. a patient undergoing a medical imaging procedure, based on remote observation, e.g. camera images of the subject.

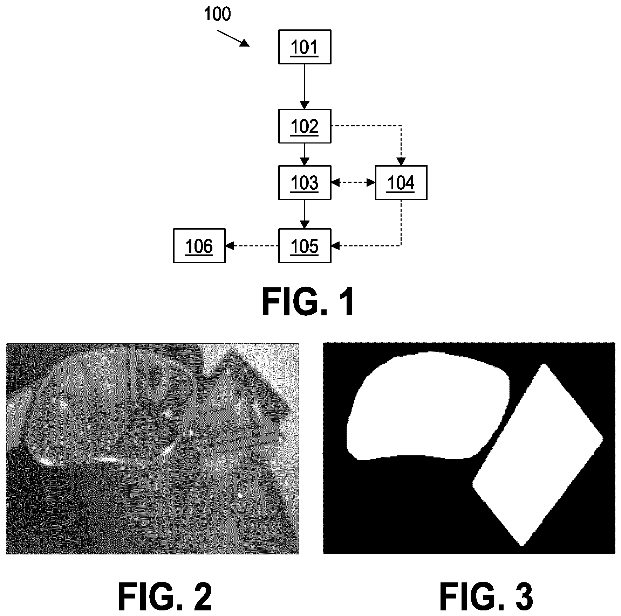

FIG 1 shows an illustrative method 100 in accordance with embodiments of the present invention.

The method comprises acquiring 101 camera images from a camera configured to monitor a body part of a subject during an examination or intervention via a reflection thereof in a reflective surface, e.g. a mirror. The examination may be, for example, a magnetic resonance imaging, computed tomography, positron emission tomography or single-photon emission computed tomography examination. Examples of interventions include therapeutic and related procedures, such as surgery and radiotherapy. Related procedures refer to procedures of, generally, a medical nature or in which health is a typical concern (including, for example, also cosmetic interventions such as plastic surgery). Particularly, the signal determined by the method may be used to control a system or device used for the examination or invention and/or be used in processing data acquired by the examination, e.g. using a signal indicative of motion, cardiac function and/or respiratory function to gate a data acquisition or the delivery of the therapy or to sort and collate acquired (raw or reconstructed) image data (without limitation thereto). The body part may be the face or part thereof, but is not necessarily limited thereto (e.g. also the skin of another body part may be observed by the camera). The signal may be a signal indicative of cardiac and/or cardiovascular function, e.g. a photoplethysmography (PPG) signal.

In many situations, it may be difficult to observe the body part of interest directly. For example, space constraints or properties of a device used for the examination or intervention may make it difficult to set up a camera in a direct line of sight. For example, in MRI, the camera may need to, or should preferably, be positioned outside or at an edge of the scanner bore, e.g. such as not to restrict the already limited space (bore diameter) and to avoid interference with the sensitive systems, e.g. with magnetic fields and/or radiofrequency emissions/reception (or vice versa, influencing the camera operation by the scanner system). By using one or more reflective surfaces, e.g. mirrors, a camera set up at a distance can monitor a larger area of skin, e.g. of the face, via reflection(s) thereof. This has also the advantage that the camera maintains a broader overview, e.g. can monitor both the general position, pose and state of the patient and/or auxiliary equipment as well as have a detail view of the body part of interest.

However, while the use of a mirror or similar reflector to monitor the body part of interest overcomes some difficulties, e.g. when the operation and/or properties of a scanner or therapy system and/or the pose of the subject during a procedure put constraints on the available optical paths between a camera and the body part, it comes with other problems. For example, the mirror may only offer a limited view of the body part, in which it may be difficult to detect broad features by an algorithm, e.g. facial or body recognition. Only a small region of the body part of interest may be visible, and the mirror may be at different positions or in different orientations between different examinations or therapeutical procedures. However, embodiments of the present invention may overcome these challenges and may even turn such disadvantages into properties that can be usefully exploited, as will be discussed further hereinbelow.

A camera can thus monitor the subject throughout the entire examination or intervention, when set up correctly, e.g. pointing towards the patient. A useful signal, such as a PPG signal, can then be extracted from the acquired video sequence.

The camera may be an infrared camera (e.g. operating in the near infrared range, NIR, e.g. a camera sensitive in the range of 800 to 850 nm), e.g. such that a PPG signal can be extracted without disturbing the workflow, e.g. without requiring an adjustment of the (visible) lighting conditions, and/or without being influenced by ambient lights (in the visible spectrum). Since the human eye is not sensitive to infrared light, the subject being monitored is therefore not affected by unpleasant, disturbing and/or uncomfortably (or even painful) bright light. However, embodiments are not limited thereto. For example, it is also possible to extract a PPG signal (or other useful signal) from imaging in the visible light range. For example, the light absorption of (de)oxygenated hemoglobin is stringer in the (near) infrared wavelength range than for (e.g. red) visible light, and infrared light can penetrate deeper into skin (e.g. the influence of melanin in the skin is less pronounced). Also, infrared cameras, e.g. based on semiconductor pixel detectors, can have a higher sensitivity in the NIR range (e.g. 800-850nm) than for wavelengths above 900 nm, which can result in a higher signal to noise ratio and/or better operation when the body part of interest is not ideally illuminated. However, embodiments of the present invention may also aim at generating a different type of signal, e.g. a signal indicative of motion, for which other wavelength ranges may be better or equally suited. Other light ranges (than IR or NIR) may also be used for PPG signal detection, since it has been observed that video imaging in, for example, the red or green wavelength range can also provide sufficient information to detect the slight variations in intensity that are used.

The camera may also be a multi-spectral camera, color camera or other type of camera that can detect (e.g. substantially simultaneously) image information in different wavelength ranges, e.g. a red, green and/or blue color component, other or even smaller color ranges in the visible spectrum, a NIR component or combination of different NIR wavelength ranges, and/or combinations thereof (without limitation).

The method 100 may comprise illuminating (at least) the body part of interest with light (emitting in at least a range suitable for imaging by the camera, e.g. having a sufficient overlap with the wavelength range to which the camera is sensitive). For example, an infrared light source, such as a NIR infrared light source, or a visible light source can be used to illuminate the body part, such that a high quality video sequence can be acquired by the camera.

The method 100 comprises detecting 102 a shape or contour of the reflective surface, e.g. the mirror, in at least one of the acquired camera images. Thus, a region of interest (ROI) in the image is identified that contains image information corresponding to the body part of interest. If the body part of interest is reflected by the reflective surface, the region of interest can be directly determined by detecting the reflective surface in the image, but even if the body part is outside the view provided by the reflector, it may have a known position (e.g. at a known distance in a known direction with respect to the reflector), such that detecting the shape of the reflective surface can still be used to locate the body part of interest. Combinations where both a region of interest is reflected by the reflective surface and another region of interest is at a predetermined relative position/orientation with respect to the reflective surface (e.g. outside the mirror view) are not necessarily excluded either.

The reflective surface may be detected in only a single image, since, during the procedure, the reflector, e.g. mirror, may be assumed to be stationary with respect to the static camera setup. However, embodiments are not necessarily limited thereto. For example, the reflective surface may also be detected repeatedly throughout the procedure, e.g. in each video frame or at some time interval (or when an evaluated criterion or external trigger indicates that a recalibration of the region of interest may be needed), e.g. to reduce the influence of a misdetection early in the procedure or to account for changes in imaging geometry, for example due to translation of the patient. It is an advantage that this detection can be performed (automatically - e.g. by a processor using a detection algorithm) very efficiently, since the reflector may typically be easy to detect. For example, the reflector may have a relatively simple shape, and/or fixed shape, to detect, such as round, oval, square, rectangular, essentially rectangular (e.g. except for rounded corners, recesses or the like that modulate the base rectangular shape) or variations thereof.

Even though reference is made to the skin of the subject in the description hereinbelow, e.g. as a target element to detect in the image for extracting a useful signal from (in subsequent steps discussed further below), it will be understood by the skilled person that different signals of interest may aim at identifying other features of interest, such as an eyeball or a pupil (to give only one example), in order to be able to extract a signal of a different nature, e.g. an eye-tracking or wakefulness signal. Therefore, references to 'skin,' 'skin area,' 'skin tissue' and the like should be interpreted as, generically, an anatomical or physiological feature of the body of interest for observation and signal extraction, and not necessarily in a limitative way. It will be understood that at least some of (or parts of) such features of interest, e.g. suitable exposed skin area, an eye, a finger, etc., can be observed by the camera via the reflective surface, or can be at least approximatively located in the image on the basis of an identified location of the reflective surface in the camera image, e.g. by a known relative position thereof.

This step of detecting 102 the reflective surface may provide a first, rough, selection of the region of interest, e.g. of the mirror (or mirrors), which may be further reduced to a smaller target area or areas (or point/points) of interest in a further refinement thereof, as discussed hereinbelow. For example, observing a patient in an MRI scanner with a camera positioned outside the bore may typically reveal little skin area of the head (or other anatomical part of interest) of the patient. This can make it particularly hard to use image features, such as in facial recognition, to directly identify suitable points or regions for signal extraction. Since the reflective surface, e.g. mirror or mirrors, is deployed such as to be able to observe a suitable skin area in the camera image for signal extraction, this reflective surface(s) is/are ideal for limiting a further search for a potential area or areas of skin tissue in the image. Furthermore, compared to other approaches based on facial recognition, it is noted that the facial appearance of different subjects will be different, but the mirror or other suitable reflector will have a same appearance for a same system and/or setup of the observation system.

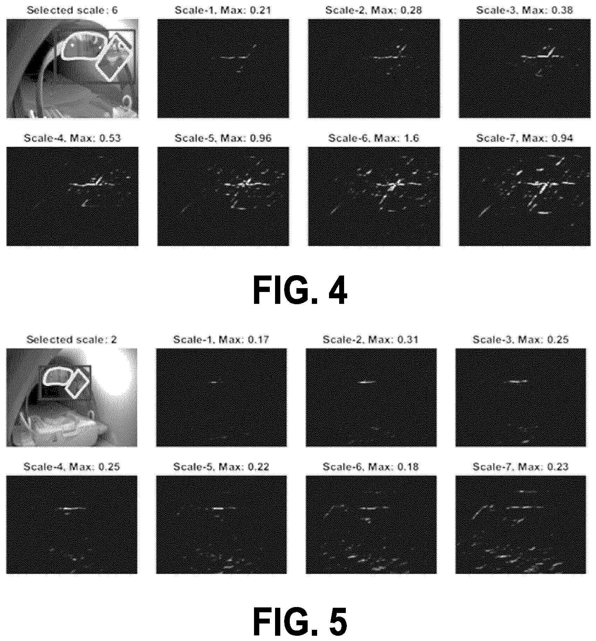

Even though the subject can be at different positions in the image, e.g. depending on pose and/or a translational position of a patient couch supporting the subject during the procedure (see also the different positions of the couch shown in FIG 4 and FIG 5, top-left images), which may influence the position of the reflective surface in the image and possibly a perspective thereof, this will amount to only relatively simple to detect variations in the image that can be modeled by relative position (e.g. an x-y spatial shift in pixel coordinates, i.e. in the imaging plane), scaling (e.g. aspect ratio) and, optionally, rotation and/or skewing. Therefore, this step of detecting the shape and/or contour of the reflective surface can be easily and very efficiently performed, e.g. using a multi-scale search using a predetermined template of the reflective surface, e.g. mirror.

For example, a measure of correspondence, such as mutual information, cross-correlation and the like, between the acquired image and the predetermined template can be used to determine the most likely (e.g. optimal in the sense of a numerical optimization) scale and/or position (and optionally other transformation parameters) of the reflective surface in the image. The most likely scale of the mirror may be determined in a first step, and its location may be determined in a subsequent step (or a combined search/optimization may be performed in the joint parameter space). As an example, the position search may be implemented by using cross-correlation of the shifted mirror template at different scales in an image.

The predetermined template can be determined, e.g. in a calibration of the system, based on a camera image that has been cropped to only show the reflective surface, or a more advanced model of the reflective surface may be used to create the template, e.g. based on known characteristics of the reflective surface. It is an advantage that such calibration may only need to be performed once for a camera system setup or model system, even though more frequent calibration is also an option. An example of a template image of a mirror assembly obtained by cropping a calibration image is shown in FIG 2.

A cropped image of the reflective surface may be preprocessed (e.g. as part of the calibration to configure the camera system and/or detection algorithm) to improve its ability to match a wide range of usage scenarios. For example, the template may be processed by a high-frequency spatial kernel to extract high-frequency features and suppress low-frequency context, such as mean intensity (e.g. a DC component).

For example, first-order spatial derivative kernels may be used to extract edge or gradient features of the image, such that the contours (e.g. edges and/or corners) are emphasized or extracted, while removing the irrelevant image content, e.g. the bulk of the reflective surface itself where, in use, a generally variable image (e.g. of a face, other body part, or a sub-part thereof) is reflected onto the camera. Higher-order spatial derivatives may be used in addition or alternatively, or a spatial filtering kernel may be used that does not exactly correspond to a specific derivative (e.g. being a combination of different orders or a having a different analytical form, yet preferably excluding or strongly suppressing the zeroth order, i.e. the constant component). Additionally or alternatively, directional spatial filters may be used, e.g. the filter is not necessarily symmetric, even though this may be preferable, at least in some embodiments, for the sake of simplicity and efficiency.

For a reflective surface, e.g. mirror, of fixed shape, having a fixed edge and/or constant curvature, the use of only or predominantly high-frequency features may provide a more stable and/or accurate detection in camera images in use of the method. For example, low-frequency features may be more easily influenced by ambient or environmental conditions, such as distance of the reflector to the camera, illumination and distance to the light source. The reflective surface may also offer a limited view on a relatively small part of the body, such that low-frequency components may be more variable and/or more dominantly present in the image part being reflected by the reflector, which can vary across multiple examinations or procedures (e.g. for different subjects).

A binary mask to identify the region(s) of interest is shown in FIG 3, e.g. corresponding to (and in relation to) the cropped calibration image of FIG 2. Once the template has been matched to the acquired camera image, position and/or other parameters determined by the matching algorithm can easily be applied to project the template mask onto the camera image so as to define the region of interest mask in the camera image space. Obviously, such template mask can also be used to select which pixels to evaluate by the correspondence measure, e.g. to exclude non-mirror image content in the matching search. It will also be understood by the skilled person that two different masks may be used, e.g. one to define the pixels to compare (e.g. corresponding to a mirror frame or rim) and one to define the region of interest to return when the reflective surface is identified in the camera image, e.g. identifying the pixels that correspond to the reflective area of the reflector showing the body part of interest.

The camera image may be preprocessed, before performing the matching search, using the same or a similar approach as the template, e.g. to allow a relatively simple measure of correspondence, such as cross-correlation, to be used to match the template at a position (and/or scale, orientation, ...) in the image to the template. Accordingly, the input raw camera image may be preprocessed before performing a (e.g. multi-scale) cross-correlation matching with the mirror template with the same algorithm as used for the template, e.g. the high-pass filter. However, other measures of correspondence may be used which are less sensitive, e.g. a metric based on information theory or on (optionally normalized) spatial derivatives, such that preprocessing requirements may be relaxed or even avoided (or, in a sense, directly integrated in the correspondence measure). The best scale and location (and/or other parameters) of the mirror may thus be determined based an optimum of the measure of correspondence, e.g. a maximum value of the cross-correlation, across all the scales and all the positions (denoting the best similarity of template matching or registration). Other (partial) image registration techniques as known in the art may also be suitable for this purpose.

A multi-scale search may, for example, refer to the matching of differently scaled versions of the template image to the camera image content, in which at each scale different positions (and/or other transformations, such as rotation or skewing) are evaluated. This may also be implemented in a progressive multi-step procedure, e.g. first evaluating a limited number of different, rough, scales (and/or positions, ...) and using the best match to define a smaller range of options around the found match at a finer resolution (of scale, position, ...) to evaluate in a next step.

Alternative approaches, as known in the art, may also be applied. For example, a wavelet or similar transformation may be used to perform a joint location-scale search (potentially also including other transformation parameters).

Alternatively, or additionally, to an optimization-based search for the reflective surface(s) in the camera image, a machine-learning based method may be used, e.g. a machine learning classification algorithm trained to recognize the specific shape of the reflective surface in images (e.g. based on a training set of data) to identify its position and/or other parameters (e.g. rotation, skewing, scale and/or other geometry-related properties).

Furthermore, the reflector detection may take additional information into account, such as positional information from a (automated) patient couch. This may, for example, be used as an additional input (e.g. for a machine-learning based algorithm), and/or to define constraints on the parametric search space prior to applying a detailed search algorithm. Alternatively, such information can be used to define the region of interest directly, e.g. to directly infer the mirror position in the image on the basis of a lookup table using the couch position (and/or other parameters of the system) as reference, even though an image-based search might be able to provide tighter bounds on the identified region of interest in the image.

The result of this detection 102 may be in the form of a parametric specification of a region of interest corresponding to the reflective surface in the image, e.g. as a specification of parameters of a rectangle or other parametric (e.g. algebraic) model of the reflective surface, such as length, width, position of a corner or the center, orientation angle and/or similar algebraic parameters, or in the form of an image mask identifying the region of interest (without limitation thereto). This detected region may be used to crop the image to the region including the skin area of interest for signal extraction (e.g. including some non-skin background). A result of the detection step may be in the form of a binary mask, e.g. having a Boolean to indicate the presence of the reflector in each corresponding pixel (or equivalently, the absence thereof), or in the form of a soft mask, e.g. in which mask image values over a non-binary range indicate a probability that the reflective surface is present (or absent) in the corresponding pixel, e.g. a probability map or fuzzy logic map.

The detection step can equally be applied to cases where multiple reflective surfaces are used, e.g. to provide simultaneously different views of different or the same skin area(s) in the camera image. Multiple reflectors may be identified in a single, joint search (e.g. extending the parameter search space accordingly), in sequence or in parallel. The reflectors may have different shapes, with corresponding predetermined templates, or may have substantially the same shape (and thus use the same template). It may be advantageous to use different shapes and templates so as not to confuse the search algorithm, e.g. to render the detection algorithm for one reflector less sensitive to the presence of another reflector (and vice versa), but this is not strictly necessary. The use of a uniform shape of the mirrors may also have advantages, such as simplification of the applied algorithm(s) and/or a reduction of computational resources needed to apply the algorithm(s) and/or to train a machine learning model.

Furthermore, it is noted that the region of interest is not strictly limited to the area defined by the contour of the reflective surface. For example, a direct view of usable skin area for signal extraction may be known at a fixed (at least approximately) position with respect to the reflective surface in the image, and can be included as a further region (or integrated into the region) of interest. For example, a rough location of a skin area that is directly observable by the camera can be determined in a predefined imaging setup, e.g. at a certain distance below the identified reflector (possibly taking a determined scaling and/or rotation into account). For example, after determining the region of the camera image corresponding to the reflective surface, a part or parts of the image in which a direct camera view on the skin is available can be inferred based on modelling or regression of spatial coordinates and scale.

FIG 4 and FIG 5 show two examples of a multi-scale search for the location and scale of a mirror assembly using cross-correlation. In the example of FIG 4, a patient couch is relatively close to the camera, whereas in FIG 5, the patient couch is further away from the camera, as can be seen in the raw images on the top-left of FIG 4 and FIG 5. On these raw images, the best match of the (multi-scale) template as found by the maximum cross-correlation has been overlaid. The remaining images in FIG 4 and FIG 5 represent maps of the cross-correlation (pixel location representing template location in each image, the intensity value of the pixels being representative of the calculated cross-correlation, and different images corresponding to different evaluated scales). The maximum cross-correlation found, in these examples, at each scale is indicated in the headers for each subimage.

After detecting 102 the reflective surface to identify the region or regions of interest that contains image information corresponding to the body part of interest (e.g. inside the mirror view/s, and possibly also in predetermined location/s as determined relative to the mirror/s), the method 100 comprises segmenting 103 the detected region(s) of interest in the camera image or images to determine image features of the body part of interest, e.g. performing an image segmentation that is limited to a soft or hard mask as obtained by the step of detecting 102. For example, pixels or pixel areas inside the defined region or regions of interest may be selected that correspond to a body feature of interest, such as exposed skin (without limitation thereto, depending on the signal of interest to extract, e.g. other features that may be segmented are a pupil, an eyeball, a finger or part thereof, ...).

This segmentation, e.g. skin segmentation, can be used to refine the region(s) of interest to the part(s) thereof that is relevant for signal extraction. For example, the region of interest may correspond to the area of the image containing a reflection via the mirror(s) and/or (generally rough) region(s) defined in relation thereto, e.g. a region below the mirror where a direct view by the camera is assumed. Thus, the region of interest is likely to contain both pixels of interest, e.g. skin pixels, and pixels that are not, e.g. non-skin pixels, such as from the background. It may be important to reject the irrelevant (e.g. non-skin) pixels in the region(s) of interest to avoid a degradation of the signal to be determined from the images, e.g. a PPG signal.

When the region of interest is defined by the aforementioned step 102 as a soft mask, or in another way in which the region is defined as a probability per pixel rather than a Boolean indicator, the segmentation may take this into account, e.g. by weighting the segmentation accordingly. For example, the probability of identifying a pixel as inside the set of pixels of interest (e.g. skin area) may be weighted by the probability of that pixel being inside the detected region of interest. Other, more elaborate ways as known in the art to take the fuzzy or probabilistic nature of the definition of the region of interest into account may be considered as well.

The result of the step of segmenting 103 the region of interest may be an identification of the pixels of interest, e.g. a list of coordinates, or a binary mask. However, embodiments are not necessarily limited thereto, e.g. other means of describing the identified pixels or subregion(s) can be considered as well, including possibly a further soft mask (e.g. such that the probability of a pixel being of interest for extracting the signal can be taken into account in a further step, e.g. by calculating a weighted average over the identified pixels in accordance with the probability).

The determined image features of the body part of interest inside the region(s) of interest may be a solitary pixel or pixels, or one or more continuous subregions of the region(s) of interest, e.g. as defined by a mask obtained by the segmentation. Such subregion may typically have an irregular edge that is adapted to the image content. For example, different individuals may have different skin segmentations and/or the view of the body part as seen through the mirror(s) can vary across imaging sessions (which also applies to a roughly identified region for direct camera observation that is defined relatively with respect to the mirror but not inside the reflection).

Many suitable segmentation algorithms are known in the art for the purpose of performing the segmentation step in accordance with embodiments of the present invention. A particularly (advantageously) simple approach may be to segment the region of interest on the basis of the pixel intensities, e.g. a "DC-based" approach that uses the light intensity of each pixel to differentiate pixels with the right light reflection characteristics (e.g. skin reflection) from other image elements (such as a lighter or darker background, the eyes, the mouth, ...).

References to DC and, further below, AC should be understood as using an analogy to conventional one-dimensional signal processing, e.g. referring to a static component that is constant in time as direct current (DC) and dynamic components that vary in time as alternating current (AC). However, it will be clear to the skilled person that this is merely an analogy, in which such static/dynamic dichotomy is transposed to a situation where the "current" is replaced by image intensity values. Both DC-based and AC-based methods may share the characteristic that pixels are considered in isolation (processing a static value per pixel or a time series of values per pixel, on a pixel-by-pixel basis), are predominantly considered in isolation. However, embodiments are not limited thereto, and various techniques as known in the art may be used to take spatial information into account as well, e.g. in which the segmentation result for a pixel is not only dependent on the data acquired for that pixel, but may also take information from neighboring pixels into account (without necessarily a limitation to how far such influence reaches, which pixels in the neighborhood are considered, or how strong the contribution is from other pixels, e.g. depending on the technique used).

Other approaches, which take spatial information into account, may use (in isolation or in combination with intensity) contour or edge effects to find the boundary of a continuous area (or areas), e.g. using first order or higher order spatial derivatives for edge detection. Yet other approaches may use (possibly in combination with other features) pattern detection to detect a specific texture of the feature of interest (e.g. a characteristic texture of skin), morphological operations and/or spatial filtering (e.g. wavelet-based) to detect a specific shape (e.g. the shape of a pupil or an eye) or combination of shapes.

Variations in time (since the camera obtains a video stream) can be used to identify pixels, groups of pixels or subregions (of the ROI) that show the desired dynamical behavior of interest, e.g. in an "AC-based" approach. For example, such dynamic behavior may correspond to an expected skin pulsatility, such that pixels identified to show this dynamic may be further used to extract a PPG signal (without limitation thereto). Thus, a "living skin" model can be used to detect pixels (or region/s) that show the pulsative behavior that can be used for extracting useful information. For example, such "AC-based" approach may use a temporal filtering and analysis in the temporal frequency domain (e.g. based on a Fourier transform), first order and/or higher order temporal derivatives, a time-scale analysis, or alternative thereto as known in the art. Dynamic skin-pixel selection may thus be based on the dynamics of "living skin," in which pixels showing stronger pulsatilities, e.g. a larger amplitude in the heart rate band relative to (e.g. normalized to) the DC intensity amplitude (i.e. the constant term of a Fourier expansion), can be selected as belonging to the skin segmentation component. For example, the heart rate band may correspond to a temporal frequency range of, approximatively, 40 Hz to 240 Hz (or similar suitable range).

An advantage thereof is that a signal generated from pixels thus selected (e.g. when the signal represents a characteristic derived from such dynamics, e.g. a PPG signal) can have a good signal to noise (SNR) ratio, e.g. potentially better than the same signal determined from pixel(s) selected by a segmentation method that is not taking these dynamics into account. However, it may also create a time delay in the signal availability, since a temporal signal buffer may need to be filled before the segmentation can be performed based on, e.g., a fast Fourier transform. Furthermore, this approach, at least when used in isolation (e.g. is not combined with other segmentation techniques) may be sensitive to temporal distortions, e.g. illumination changes or body movement, which may make it less stable than, for example, a "DC-based" segmentation approach.

It is also noted that techniques referred to as "AC-based" approaches are also not necessarily limited to skin segmentation and/or PPG signal extraction in a further step. As one example, a model for eye movement, blinking and/or pupil dilation may be used to identify a specific temporal frequency band or bands that are more likely to be associated with dynamics of the eye and/or pupil than to nearby image content.

A segmentation method may combine different approaches, e.g. a discussed hereinabove, e.g. by combining results of different approaches, e.g. using set unions or intersections, weighting of intermediate segmentation results into a combined map, etc., or by using a segmentation algorithm that takes indicators of different nature directly into account, e.g. as different terms or factors of an objective function in an optimization (without limitation thereto). As an illustrative embodiment, first an intensity-based ("DC-based") segmentation may be performed, and the candidate pixels or subregions thus obtained can be analyzed in the frequency domain to determine whether it conveys a pulsative signal or not (or to reject pixels or parts thereof that do not show a sufficient or detectable pulse response). The latter example has the advantage that the intensity-based segmentation can be performed very efficiently, due to its simple nature as well as the region of interest to be processed already being only a (possibly small) part of the entire camera image, and the efficiency of the frequency domain analysis can be increased by only considering the pixels which were not already rejected by the first, rough and simple, segmentation. Furthermore, if the method aims at segmenting skin, a simple intensity-based segmentation may be quite stable, since the contrast between the skin intensities and non-skin intensities in a predetermined camera setup is generally quite stable and sufficiently large. While such intensity-based segmentation may already offer good results, in accordance with some embodiments, a further step of considering the dynamic behavior may be able to reduce the number of pixels which do not show a good observable response, and thus may reduce noise in the signal determined on the basis of pixels selected by the segmentation for further processing.

It is also noted that, as already mentioned, the camera may be a multi-spectral (e.g. color) camera that detects image information in different wavelength ranges. This may improve the results of a segmentation by taking different wavelength ranges into account, e.g. by performing a segmentation in a multi-dimensional color space. References to "intensity-based" or "DC-based" methods may thus be considered to encompass alternatives in which the "intensity" is not scalar, but instead a vector value. Likewise, other (non-DC) methods may operate in a similar manner on vector entities as input (per pixel). For example, differentiating the pixels of interest, to extract a signal from, from the background (or other irrelevant information) may be easier if additional image information is available (e.g. is multi-dimensional in the output space). Differentiating skin and non-skin may for example be easier, even if a simple method such as intensity-based (or the vector-extension thereof) segmentation is used or used as part of the segmentation algorithm. Various approaches can be considered to take spectral (multi-dimensional) information into account, e.g. combining a scalar analysis per component, using a weighted combination of spectral components as input for a scalar analysis, defining instead of a target intensity range for a segmentation component of interest a target volume in the multi-dimensional space (e.g. color space) into which a spectral vector should lie to be selected into that component, and/or other techniques known in the art for color or multispectral image segmentation.

The segmentation 103 can be performed on each image of the video stream captured by the camera, or at least frequently (for example, repeating the segmentation at regular intervals in time). If dynamic behavior is used in the segmentation ("DC-based"), "on each image" obviously takes neighboring time points (image frames) in the sequence into account as well. Embodiments in which the segmentation 103 is only performed once, e.g. on a first image or first time block of images, are not necessarily excluded. Instead of repeating the segmentation at regular intervals, e.g. every 100 frames (without limitation thereto, e.g. a suitable interval can be easily determined depending on processing performance and/or output signal quality), or in addition thereto, the signal generated in a further step may be evaluated using a quality metric, e.g. indicative of signal to noise, to trigger (re-)execution of the segmentation when signal quality is poor, e.g. decreases below a threshold or has decreased by a predetermined factor relative to a reference value (e.g. which may be determined at or shortly after the point in time that the segmentation that presently is still in use was performed). Thus, the segmentation may also be performed at irregular intervals in time, e.g. conditional on a quality metric or other factor that is determined dynamically.

The method 100 may also comprise a step of determining 104 motion of or in the monitored body part between the acquired camera images. A signal is determined from the pixels identified by the segmentation step, e.g. a PPG signal may be measured from skin pixels in the time domain by concatenating spatially averaged skin-pixel values. This signal (e.g. the amplitude of the PPG signal) may be significantly weaker than effects due to body motion, or may be at least sensitive to such influence, such that the acquired signal can be polluted by movement, e.g. head movement, facial expression and/or eye blinking.

The detected motion may be used to further exclude areas or pixels inside the segmented image region(s), e.g. the detected skin pixels, where an extracted signal would likely be affected by motion (e.g. at skin/non-skin boundaries). Thus, the segmentation mask may be shrunk to the substantially motionless areas/pixels.

Various methods are known in the art to detect motion in a video stream. For example, conventional image registration techniques may be used to find a proper alignment and/or deformation to project one image onto a previous image, or another reference image acquired earlier. However, in view of efficiency and to reduce latency, it may be preferable to use a motion estimation algorithm to determine a field of motion vectors, e.g. defined over a grid covering the image or per pixel, for example by estimating a (e.g. dense) optical flow. It is an advantage that optical flow can be calculated very efficiently (and can also be easily performed by parallel processing, e.g. using a graphics processing unit, multiple processing cores and/or computing cluster.

Thus, for each pixel (either directly or by interpolation in a grid, or by inferring from transformation parameters determined by a registration), the motion can be determined. This may, for example, be used to generate a motion mask, e.g. a binary (or soft) motion mask, to annotate pixels (or at least the pixels of the image part of interest determined by the segmentation). Thus the pixels that are still under consideration for processing (to generate the signal) after the segmentation step can be pruned to reject pixels that show substantial movement, or, vice versa, the segmentation mask may be used to prune irrelevant parts from the motion mask.

A motion mask to indicate substantially motionless regions may thus be combined with a segmentation mask to indicate the area(s) and/or pixel(s) of interest to determine which pixels are suitable for (robust) signal extraction. As an example, the segmentation may be performed less frequently, possible only once, and the motion mask may be determined more frequently, e.g. for each image frame, such that an efficient use of computing resources can be achieved and a substantially real-time output signal may be generated. However, in accordance with embodiments, both segmentation and motion estimation may also be executed substantially at the same frequency, e.g. substantially for each image of the stream, e.g. in parallel processing chains.

Optionally, the motion mask may be further processed, e.g. using an erosion/dilation or combination of morphological operations and/or to constrain the mask to a continuous or convex shape or combination of a limited number of such disjointed shapes. Thus, specific geometric patterns may be used to reduce the effect of improper selection by the segmentation step and/or of selection of regions vulnerable to motion artefacts. For example, a selected skin area can be restricted to a convex area to substantially capture a forehead or a check area, i.e. to coincide with its natural shape. Obviously, such further processing may also (additionally or alternatively) be applied to the segmentation mask.

For example, by combining the motion mask with the segmentation mask, pixels of interest (as identified by the segmentation) that show a large motion amplitude can be suppressed, e.g. skin areas with motion such as eye blinking can be eliminated. In the example of PPG signal extraction, the eye blinking motion may need to be, preferably, suppressed, since it can introduce sudden bumps in the PPG signal. Due to the proximity of the chest region to the facial area when the patient is in supine position and observed by a camera outside the bore, pixels exhibiting respiration motion may need to be suppressed as well.

The determined motion may also (alternatively or additionally) be used to transform the segmentation mask, such that the pixels of interest can be identified in each video frame without requiring that the segmentation is performed for each frame. The determined motion may also be used (additionally or alternatively) to trigger a new segmentation 103 (if not carried out already on a per-frame basis) when a sufficiently large motion is detected. The determined motion may also be used (additionally or alternatively) to trigger a new detection 102 of the reflective surface when a sufficiently large motion is detected. Different thresholds can be used for these triggers, or the reflective surface may be assumed stationary throughout the procedure. Alternatively, an external input, such as a signal from a controller of the (diagnostic) imaging system may be used to reinitialize the reflective surface detection, e.g. a trigger to indicate motion of a patient couch. The triggers to repeat the segmentation and/or reflector detection may be adapted to detect bulk movement, e.g. a sufficiently large magnitude of the average movement vector, whereas other uses of the motion detection may be more sensitive to smaller motion, e.g. for generating a motion mask (e.g. to exclude eye blinking, facial expression changes, etc.) and/or transforming the segmentation mask to take (relatively small) motion into account.

As already mentioned for the segmentation mask, that mask may be binary, but also multi-valued, e.g. on an ordinal or (substantially) continuous scale, e.g. a probability, fuzzy or "soft" mask. The same applies to a mask indicative of motion, for example such that the segmentation mask and motion mask can be combined to form a binary (e.g. by set intersection) or multi-valued (e.g. indicating a probability or measure of confidence) selector for pixels in the image to be taken into account in determining the signal of interest.

The method further comprises a step of determining 105 the signal indicative of the state of the subject, e.g. indicative of a physiological state and/or parameter, such as a signal indicative of cardiac, cardiovascular and/or respiratory function, e.g. a photoplethysmography (PPG) signal.

The signal is determined from the image pixels identified by the segmentation and/or motion compensation steps, e.g. based on the intensity values of image pixels that are within the segmentation mask (or at least the component of interest thereof), and preferably also not excluded by a motion mask (e.g. assumed to be sufficiently motionless). The intensity values are collected from each time frame to construct a time series (without limitation thereto, e.g. a more limited time period may equally be analyzed and/or some of the frames may be rejected or ignored, e.g. to improve efficiency and/or to avoid data being based on poor data).

For example, for each image frame under consideration, the selected pixels (e.g. from segmentation or segmentation filtered by motion rejection) may be combined into a single value representative for the corresponding point in time, e.g. by (spatially) averaging the pixel intensities of the selected pixels per point in time, and combined to form a time series. Other measures to summarize or combine the pixel values can be used as well, e.g. a median, a weighted average, or alternatives. The measure is not necessarily a measure of centrality, e.g. depending on the signal intended to be extracted may also be a measure of dispersion, e.g. a variance, a standard deviation, an inter-quartile value, etc., or even a different measure as deemed suitable for the specific signal to infer from the data.

The mask generated by the segmentation may be a binary mask, but may also be a soft mask, e.g. indicating a probability or level of confidence for each pixel. Likewise, if a motion mask is used, this can also be a binary mask or a soft mask, e.g. indicative a probability of a pixel being substantially motionless, a level of detected motion per pixel or another suitable value. Similarly, a motion mask may be a motion rejection mask, in which the values (e.g. defined per pixel of the mask) may indicate (e.g. be representative of, e.g. proportional to) the strength of the detected motion, e.g. such that areas in the image suffering from strong motion can be excluded based on the (e.g. binary, non-binary quantized or real-valued) motion rejection mask. Therefore, the summary measure calculated for the selected pixels per time frame may take this into account accordingly, e.g. by weighting the pixel components of the measure according to the mask or combined masks. Different weighting approaches can be used as well, such as weighting a component (e.g. a term in an averaging operation to determine the summary measure) by the distance to the mask (or combined mask) boundary. Such distance can be determined in accordance with various metrics, e.g. an Euclidean distance, Chebyshev distance, Manhattan distance, or other suitable distance metric. Likewise, different alternatives to defining the distance to the boundary, regardless of the used metric, may be used, e.g. distance to the closest point on or outside the boundary, using normal projection lines onto the boundary and selecting the closest, only considering the closest distance in horizontal and vertical directions (in the sense of image grid coordinates, e.g. for the sake of efficiency), and possibly other alternatives. Such distance weighting may be used in isolation (or not at all for some embodiments), or can be combined with a weighting factor inherent to the soft mask(s). The use of a distance-based weighting factor may be advantageous, since pixels further away from the boundary of the selected pixel area may be presumed to be less sensitive to influence by jittering of the boundary.

The step of determining 105 the signal may output 106 the timeseries as thus determined, e.g. a raw signal representative of average (for example) pixel intensity of the selected pixels, or may process this timeseries further to determine the signal as a characteristic of interest of the timeseries to be provided as output 106. For example, frequency filtering and/or analysis may be used to reduce noise and/or to select a frequency band of interest.

The signal being generated may be a trigger based on a characteristic feature or features of the raw PPG (e.g. averaged intensity of selected skin pixels), such as valleys in the raw signal that represent the systolic phase. Such trigger may be provided as output of the method, e.g. to trigger data acquisition by the imaging system and/or to be used in processing or annotating data acquired by the system.

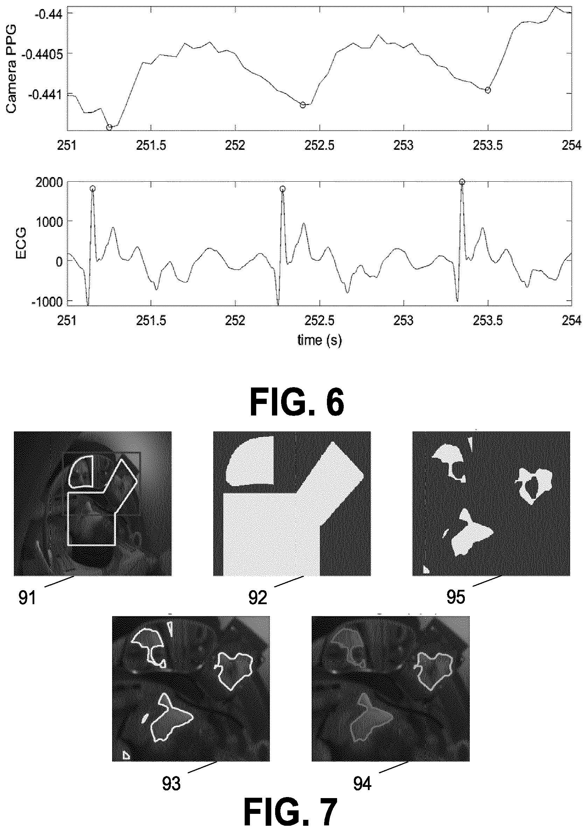

FIG 6 shows a PPG signal that is generated by a method in accordance with embodiments of the present invention (labeled "Camera PPG") as function of time. The scale on the Y axis may be considered arbitrary, or at least less relevant for the purpose of generating triggers corresponding to the valleys (local minima) of the signal (indicated by circles on the plot). For the sake of comparison, below this, an electrocardiogram (ECG) is shown that is simultaneously acquired. On this ECG, the R-peaks are indicated by circles. As can be seen, albeit with a small delay, a good correspondence between the PPG-based triggers and the R-peaks can be achieved. Therefore, it can be presumed that the PPG markers can be used in practice to trigger an MRI acquisition (or in similar diagnostic imaging applications or in therapy delivery applications) as a proxy to the ECG trigger.

It is noted that, alternatively, the signal may be generated by matching corresponding pixels across time, thus collecting a plurality of time series corresponding to different pixels (or averaged over smaller groups of pixels), which may be combined into a global signal by suitable processing, e.g. first extracting a characteristic of interest (e.g. a trigger indicative of a local minimum in the signal trace) from each signal and then averaging (or otherwise globalizing) the extracted characteristic (e.g. averaging the time point associated with the detected triggers, applying a majority voting strategy, using an averaging to create a non-binary value indicative of confidence, and/or another suitable strategy for combining the extracted information for different points in space).

The method may furthermore comprise a step of outputting 106 the generated signal, e.g. for use as a trigger by the system for acquisition or therapy delivery gating, to store alongside the acquired data by the system (e.g. to annotate reconstructed or raw data acquired by the system), to aid in processing the acquired data, and/or similar purposes.

It is also noted that the method in accordance with embodiments may be suitable for parallel processing of at least some steps or operations. For example, the detection 104 of motion-prone pixel areas (e.g. in the eyes, face, chest) and the segmentation 103 may be performed simultaneously, e.g. in separate processing threads, and the results may be combined when both become available to obtain a final selection of pixels for signal extraction 105.

FIG 7 shows an illustrative application of a method in accordance with embodiments.

A camera image 91 is acquired, in which, using a multi-scale template search, a mirror assembly is detected (indicated by outline in overlay on the image). This creates a first mask 92 to indicate the regions of interest in the image (albeit shown slightly cropped with respect to the camera image 91).

In the camera image as masked by this first mask, a segmentation is performed (see image 93). From the segmentation, in this example, candidate regions 94 for signal extraction are selected, e.g. the top three regions in size (without limitation thereto). Furthermore, e.g. simultaneously, a motion mask 95 is determined to find substantially motion-less regions in the image. As can be seen, the eyes are detected as prone to motion and excluded in this motion mask.

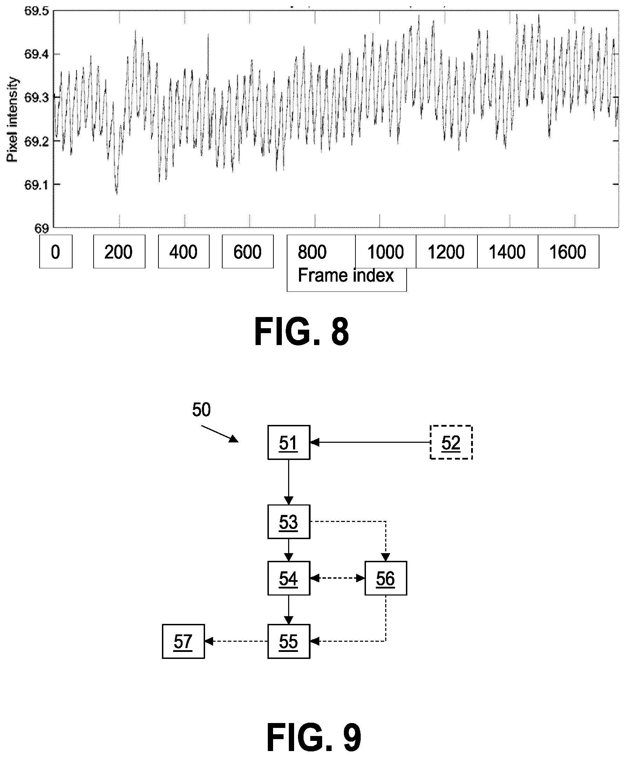

From the selected segmented areas, and after rejecting motion-prone pixels, a signal can be extracted. FIG 8 shows such signal, constructed as the average pixel intensity as function of time (or, at least, video frame), that can be used as a synthetic PPG signal in this example.

It is also noted that a method in accordance with embodiments of the present invention can be applied to generate the signal in a substantially real-time manner, e.g. by continuously processing new camera images when they become available. Even though the image processing can require some processing time, a good response, e.g. a low processing delay, can be achieved, e.g. by advantageously using parallel processing capabilities.

In a second aspect, the present invention relates to a device for determining a signal indicative of a state of a subject during a diagnostic imaging or therapeutic procedure based on remote camera observation.

An illustrative device 50 in accordance with embodiments of the present invention is schematically shown in FIG 9. The device comprises an input 51 for receiving camera images from a camera 52 (or cameras) configured to monitor a body part of the subject during the diagnostic imaging or therapeutic procedure, e.g. directly and/or via a reflection thereof in a reflective surface. The device may comprise the reflective surface, e.g. a mirror, and/or, in use, the presence of the reflective surface inside the view of the camera is presumed.

The device may comprise the camera 52. The device may also comprise the reflective surface (or reflective surfaces), e.g. a mirror or mirror assembly. The device may also comprise a light source to illuminate the body part of the subject. The camera may comprise an infrared camera, a monochrome camera operating in the visible wavelength range or part thereof, a color camera, and/or a multi-spectral camera.

The device comprises an image feature detector 53 for detecting a shape or contour of the reflective surface in at least one of the received camera images to define a region of interest in the image that contains image information corresponding to the body part of interest.

The image feature detector may be adapted to perform a multi-scale search to detect the shape or contour of the reflective surface using a template of the reflective surface. For example, the multi-scale search may evaluate a measure of correspondence for a plurality of different candidate positions in the camera image and for a plurality of different scales of the template to identify a (e.g. optimal) correspondence in position and scale of the template to the camera image.

For example, the device may be adapted to receive the template and/or store the template. The device may also be adapted to perform a calibration procedure, in which a calibration image is received from the camera, the calibration image is cropped (e.g. by manual interaction and/or by applying a more computationally demanding shape detection algorithm) to the size of the reflective surface in the image, and (optionally) to apply a high-frequency spatial kernel to suppress low-frequency context. Likewise, the feature detector may be adapted to apply the high-frequency spatial kernel (or a similar filter) to the camera image before calculating the measure of correspondence on the basis thereof.

The device may also comprise a further input to receive information regarding the positioning of the subject during the procedure from a diagnostic imaging or therapy delivery system for performing said procedure, in which the feature detector may be adapted to take this information into account.

The region of interest defined by the feature detector may comprise a first image area enclosed by the contour of the reflective surface. Additionally or alternatively, the region of interest may comprise a second image area where the body part is directly observable by the camera without reflection via the reflective surface by using a predetermined spatial relation of said second image area with respect to the reflective surface. The region of interest may consist of a plurality of regions, e.g. disjointed and/or abutting regions, which may correspond to different reflective surfaces, e.g. mirrors, and/or different regions where a direct view by the camera can be presumed.

The device comprises a segmenter 54 for segmenting, e.g. by image processing, the detected region of interest in at least one of the acquired camera images to select pixels or one or more regions in the region of interest that correspond to a feature of the body part of interest. The segmenter may be configured to specifically limit the segmentation to only the detected region of interest, e.g. for reasons of efficiency.

The segmenter may be adapted to classify pixels in the camera image based on pixel intensity (or a multi-dimensional, e.g. color, pixel value) to determine whether a pixel or image region corresponds to the feature of the body part of interest.

The segmenter may be adapted to classify pixels in the camera image based on analysis of a dynamic change of pixel intensity (or value) in a sequence of the camera images to determine whether a pixel or image region corresponds to the feature of the body part of interest.

The device comprises a signal extractor 55 to determine the signal indicative of the state of the subject from the selected pixels or region. The signal extractor may be adapted to generate a signal indicative of cardiac, cardiovascular and/or respiratory function of the subject or another signal indicative of a physiological state and/or parameter of the subject. The signal extractor may be adapted to generate a photoplethysmography signal.

The device may comprise an output 57 for outputting the generated signal (or a signal derived therefrom). For example, the output may provide a trigger signal to the diagnostic imaging system and/or therapy delivery system to gate a data acquisition by the diagnostic imaging system, to control the delivery of the therapeutical procedure, and/or is to be used to sort, collate, select and/or annotate image data acquired by the diagnostic imaging system.

The device may also comprise a motion detector 56 to determine motion of or in the body part between camera images acquired at different times. For example, pixels in the region of interest (the region determined by the image feature detector 53) for which motion is detected may be excluded from the selection determined by the segmenter. Additionally or alternatively, detected motion may be used to register the selection determined by the segmentation on the basis of an image acquired earlier to account for a change in position and/or other spatial properties of the body part in the image. Additionally or alternatively, the segmenter and/or image feature detector may receive a trigger to execute the reflective surface detection and/or segmentation again when the detected motion exceeds a predetermined threshold or satisfies another criterion indicative of bulk motion. For example, the motion detector 56 may apply an optical flow estimation algorithm.

Other features, or details of the features described hereinabove, of a device in accordance with embodiments of the present invention shall be clear in view of the description provided hereinabove relating to a method in accordance with embodiments of the present invention. For example, the device may comprise a processor, computer, or similar general-purpose computing device, in combination with software adapted to perform a method, or at least steps thereof, as discussed hereinabove. The device may alternatively or additionally comprise dedicated hardware designed for performing the method, or at step(s) thereof, in accordance with embodiments of the present invention. For example, such dedicated hardware may comprise an application-specific integrated circuit, or configurable hardware, such as a field-programmable gate array.

In a third aspect, the present invention relates to a diagnostic imaging system, such as a magnetic resonance imaging system or a computed tomography system. The system has an examination zone and comprising a camera system for monitoring a subject when undergoing an examination while positioned in the examination zone. Thus, the system may be adapted for imaging the subject by magnetic resonance imaging, computed tomography, positron emission tomography and/or single-photon emission computed tomography. Alternatively, in a further aspect, the present invention relates to similar system for performing a radiotherapeutic intervention, e.g. comprising a camera system and device in accordance with embodiments of the second aspect of the present invention.

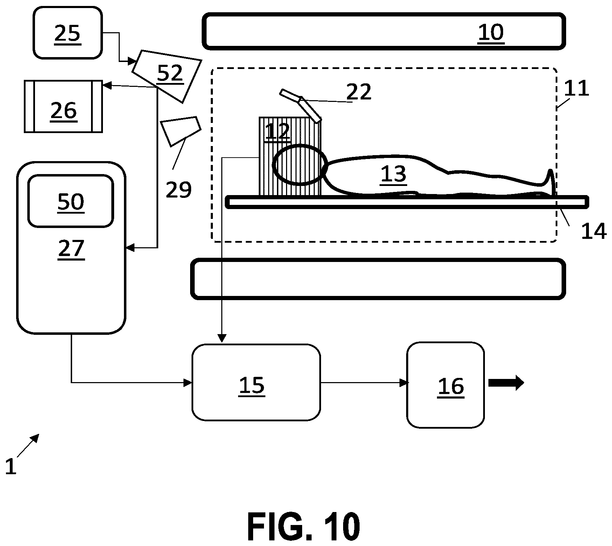

FIG 10 schematically shows a diagnostic imaging system 1 in accordance with embodiments of the present invention. In this example, the system is a magnetic resonance imaging system, however principles of the present invention can equally be applied to a system for a different diagnostic imaging modality.

A magnetic resonance examination system in accordance with embodiments may comprise a primary magnet assembly 10, which defines the examination zone 11, e.g. the examination zone may be formed by a volume where the magnetic field conditions, as substantially created and controlled by the magnet assembly, are suitable for magnetic resonance imaging. The examination zone may thus correspond to (at least a usable portion of) the volume enclosed by a magnet bore of the system (without limitation, e.g. principles of the present invention equally apply to open bore systems and other, less frequently used, magnet assembly configurations).

A subject, e.g. a patient, to be examined 13 may, in use of the system, be positioned on a patient couch 14 in the examination zone. The primary magnet assembly may comprise magnet windings, e.g. coaxial (e.g. superconductive) windings, to generate a stationary uniform magnetic field in the examination zone. The examination zone may be a cylindrical volume encompassed by these magnet windings.

The system may comprise a reconstructor 15 to reconstruct magnetic resonance image(s), e.g. tomographic MRI images, from magnetic resonance signals acquired by the system in use. The reconstructed images may be provided via an output 16 for viewing, processing or storage.

Auxiliary equipment, such as an RF T/R head coil 12 may, in use, be place in the examination zone to acquire magnetic resonance signals from the subject's head. Other auxiliary coil configurations may be used to acquire signals from other body parts or for different use cases, while, typically, signals may also be received by receiver coils already integrated in the housing of the primary magnet assembly.

The system comprises a camera 52, or camera assembly, e.g. comprising multiple cameras. The camera system is adapted to obtain information from the subject being examined, e.g. to obtain vital signs, motion, indicators of distress and the like. The images may be presented to an operator for evaluation, i.e. to derive useful information by observing the images, e.g. indicative of a state of the equipment and/or the patient, and may be used, in accordance with embodiments of the present invention, to determine a useful signal that represents a parameter or parameters of interest by image processing, e.g. by an electronic processing device,.

The camera may be mounted close to one entry of the examination zone. For example, the camera may be integrated in, or mounted on, a flange of the MR bore (e.g. such that the usable free bore diameter is not affected or only minimally reduced, and/or to avoid or minimize interference with the operation of the MR system). For example, (optional) illuminating lights 29 may also be provided in or on this flange (without limitation thereto).

The camera system may also comprise a camera control 25 to control the camera 52, e.g. to adjust parameters such as orientation of the optical axis, focal length, etc. The camera system may comprise a display 26 to display images of the inside of the examination zone 11 acquired by the camera (raw, or after suitable processing). This enables an operator to visually monitor the subject in the examination zone.

The images acquired by the camera 52 may be provided to an image processor 27 (which may for example be implemented in software, in hardware, or a combination of both) to derive information about the subject from the acquired camera image or images. The image processor is or comprises a device 50 in accordance with embodiments of the second aspect of the present invention.

The image processor 27 may be adapted to process image information acquired by the camera system, e.g. to perform static and/or dynamic image analysis to obtain information from the patient, such as vital signs of the patient, and/or motion of the patient, and/or signs of distress of the patient (or, more generally, patient mood detection), and/or photoplethysmography (PPG), and/or video-based detection of talking (or recognition of speech, e.g. of simple words or instructions based on facial features). Information on motion of the patient may include, for example, respiratory motion and/or cardiac motion, e.g. indicating the phase of respiratory and/or cardiac cycle phase. For example information on motion of the patient may be derived from image information of the outer hull of the patient's body. The information may be determined by processing (e.g. by an image-based motion detector) and/or by (direct) visual monitoring of the patient via the system by an operator or staff member.

Respiratory and/or cardiac phase information (and/or more generic information indicative of motion), e.g. the signal generated by the device 50, may be provided to the reconstructor 15 to correct the acquired magnetic resonance signals for motion and/or apply motion corrections to the reconstructed magnetic resonance images. For example, a cardiac trigger signal may be determined based on video signals from the camera. Cardiac triggering is particularly useful for cardiac MRI, for obvious reasons, but may also be applied more generally. For example, in neuro-imaging, artefacts in scans of the head and/or neck caused by pulsatile flow of blood and/or cerebrospinal fluid may be suppressed or reduced by such triggering technique or other compensation approach based on a cardiac phase signal. This may also be useful for quantitative measurement of blood flow in the carotid artery. Furthermore, a PPG signal can be extracted from the video signal by analyzing subtle intensity changes of skin pixels, e.g. in the face of a subject, such as at the forehead or at the cheeks.

Thus, the signal provided by the device 50 may be used to gate a data acquisition by the system, e.g. an MRI system or other system for performing a diagnostic imaging procedure. Or additionally, or alternatively, to control the delivery of a therapeutical procedure using a therapeutical system. Additionally or alternatively, the signal may be used to sort, collate, select and/or annotate acquired image data by the diagnostic imaging system.

In a magnetic resonance imaging system in accordance with embodiments of the present invention, the camera system may also comprise one or more light sources 29. While embodiments that rely on passive lighting for imaging are not necessarily excluded, it will be understood by the skilled person that lighting conditions can be better controlled, and imaging can be more effective, when using active lighting.

The light source 29 may be configured and positioned for directing its light beam directly into/onto the examination zone, possibly being supported by the mirror(s) or reflective surface(s).

The light source and/or the camera may be located outside the examination zone, or on or near an edge region thereof. This can simplify the configuration of the magnetic resonance imaging system (e.g. avoiding or reducing interference with the RF and magnetic field operation of the system) and may provide for more free bore width in the examination zone. For example, for a cylindrical bore system, both camera and light source (or either one thereof individually) may be located at the flange of the bore enclosure at one end of the bore, which may leave the other end substantially free, e.g. to allow unimpeded access to the examination zone (for bringing the patient and/or auxiliary equipment into the examination zone), and reducing a potential claustrophobic effect on the subject, and thus possible discomfort, while being imaged by the system.

In a magnetic resonance imaging system in accordance with embodiments of the present invention, the camera (or cameras) may be adapted to operate (e.g. substantially exclusively sensitive to) light in a (e.g. narrow) infrared wavelength range and outside the visible wavelength range.

In a magnetic resonance imaging system in accordance with embodiments of the present invention, the camera (or cameras) may be adapted to operate (e.g. substantially exclusively sensitive to) in the visible wavelength range, e.g. sensitive to a broad white light spectrum, or part thereof, e.g. a color band. The camera may be adapted to acquire monochrome information, or may be a color camera, e.g. adapted to detect, preferably independently and substantially simultaneously, different color components, e.g. a red, green and blue component (without limitation thereto). The camera may also be adapted to detect a relatively large (e.g. more than three) spectral components, e.g. may be a multispectral camera.

The light source(s) may emit light in a spectrum suitable for the camera, e.g. a broadband white light may provide illumination for a monochrome or color camera in the visible range to operate. Likewise, an infrared light source may be used to emit infrared light in a spectral range in which the infrared camera is sensitive. It will be understood that the spectra of the light source and the camera are not necessarily identical or not even necessarily closely related, e.g. the spectrum of the light source may be broader in so far that sufficient overlap exists with the spectrum to which the camera is sensitive.

The camera may be an analog camera or, preferably, a digital camera, e.g. comprising an array of pixel light detectors.

The system comprises a mirror or mirror assembly 22 arranged in the examination zone, to reflect light from a body part of the subject, such as the face or part thereof (e.g. the eyes or an eyeball, a region on the forehead, ...), onto the camera, and/or to reflect light from the light source(s) onto said body part. The mirror assembly may comprise a (e.g. non-metallic) mirror. The use of the term 'mirror' should not be construed narrowly, e.g. the mirror assembly may be constructed from components that act as a mirror and/or reflector, i.e. reflect light in the spectral range of interest.

The mirror or mirror assembly 22 may be mounted to the inner wall of the examination zone, e.g. of the magnet bore enclosure, and/or on auxiliary equipment, such as a head coil assembly. Thus, the mirror assembly may be mounted on, or formed as part of, a head T/R coil, e.g. as used for cervical, cranial and/or neuroradiological MR examinations. It is to be noted that integrating the mirror in or on the head coil may avoid costly or complex modification of existing equipment, e.g. of the scanner bore. While a relatively far distance between the camera, e.g. mounted on a flange of the bore, may result in a very limited field of view, e.g. only showing the forehead or part thereof, this may be sufficient for some applications, e.g. to monitor blood pulsation by slight variations in pixel intensity.

Preferably, the mirror 22 does not interfere with the radio frequency operation of the magnetic resonance imaging system and/or does not perturb the magnetic fields and the RF dynamic transmission field of the MRI system. Non-metallic mirrors may be particularly suitable for achieving this advantage. For example, the non-metallic mirror may be a dielectric mirror, e.g. comprising a stack of layers of different refractive index, e.g. such that a dielectric resonator is formed by the stack. While such arrangement is particularly suitable for a narrow wavelength range, it will be understood that varying the thickness of the layers in the stack can accommodate for reflection of different wavelengths, such that a broadband reflection (or approximation thereof) or reflection of multiple color components can also be easily achieved.

In a magnetic resonance imaging system in accordance with embodiments of the present invention, the mirror assembly may be particularly adapted to reflect light such as to allow the formation of an image of the body part of interest (for camera observation) on the imaging plane of the camera and/or to reflect light from the light source to the body part of interest. The mirror (or mirror assembly) 22 may thus arrange an optical pathway between a portion of the examination zone, i.e. where the body part is located when the subject is undergoing examination, and the camera, such that the camera can obtain image information from that portion. The mirror assembly may be positioned in the examination zone, e.g. by mounting to the inner wall of the magnet bore enclosure. Alternatively, the mirror assembly may be disposed on auxiliary equipment in the examination zone, such as on a local radio frequency (RF) coil, e.g. when positioned on a patient couch in the examination zone. For example, it may be practical to mount the mirror assembly onto an RF head coil.

In a fourth aspect, the present invention relates to a computer- -program product for performing a method in accordance with embodiments of the first aspect of the present invention when executed by a computing device. For example, the computer-program product may comprise machine-interpretable instructions to direct the computing device, e.g. a computer, to implement the method of embodiments.

## Claims

1. A computer-implemented method (100) for determining a signal indicative of a state of a subject during a diagnostic imaging procedure based on remote camera observation, the method comprising:
acquiring (101) camera images from a camera configured to monitor a body part of the subject during the diagnostic imaging procedure via a reflection thereof in a reflective surface;
detecting (102) a shape or contour of the reflective surface in at least one of the acquired camera images to define a region of interest in the image that contains image information corresponding to the body part of interest;
segmenting (103) the detected region of interest in at least one of the acquired camera images to select pixels or one or more regions in the region of interest that correspond to a feature of the body part of interest; and
determining (105) the signal indicative of the state of the subject from the selected pixels or region.

2. The method of claim 1, wherein the camera is configured to monitor a body part of the subject during the diagnostic imaging procedure via a reflection thereof in a reflective surface; and wherein said detecting (102) of the shape or contour of the reflective surface comprises a multi-scale search using a template of the reflective surface, in which a measure of correspondence is evaluated for a plurality of different candidate positions in the camera image and for a plurality of different scales of the template to identify an optimal correspondence in position and scale of the template to the camera image.

3. The method of claim 2, wherein said template is constructed by acquiring a calibration image using the camera, cropping the calibration image to the size of the reflective surface in the image, and applying a high-frequency spatial kernel to suppress low-frequency context, wherein said detecting (102) comprises applying said high-frequency spatial kernel to the camera image before calculating said measure of correspondence.

4. The method of any of the previous claims, wherein said detecting (102) furthermore takes information regarding the positioning of the subject during the procedure as provided by a diagnostic imaging system for performing said procedure into account

5. The method of any of the previous claims, wherein said detecting (102) defines said region of interest comprising a first image area enclosed by the contour of the reflective surface and, optionally, also a second image area where the body part is directly observable by the camera without reflection via the reflective surface by using a predetermined spatial relation of said second image area with respect to the reflective surface.

6. The method of any of the previous claims, wherein said segmentation (103) classifies pixels in the camera image based on pixel intensity and/or analyses a dynamic change of pixel intensity in a sequence of the camera images to determine whether a pixel or image region corresponds to the feature of the body part of interest.

7. The method of any of the previous claims, comprising determining (104) motion of or in the body part between camera images acquired at different times, wherein pixels in the region of interest for which motion is detected are excluded from the selection determined by the segmentation (103), and/or wherein said detected motion is used to register the selection determined by the segmentation on the basis of an image acquired earlier to account for a change in position and/or other spatial properties of the body part in the image, and/or wherein the segmentation (103) and/or reflective surface detection (102) is executed again when the detected motion exceeds a predetermined threshold or other criterion indicative of bulk motion.

8. The method of claim 7, wherein said motion is determined (104) by an optical flow algorithm.

9. The method of any of the previous claims, wherein said diagnostic procedure comprises imaging the subject by magnetic resonance imaging, computed tomography, positron emission tomography and/or single-photon emission computed tomography.

10. The method of any of the previous claims, wherein said body part comprises the face or part thereof.

11. The method of any of the previous claims, wherein said signal is indicative of cardiac, cardiovascular and/or respiratory function of the subject, is a photoplethysmography signal, or is another signal indicative of a physiological state and/or parameter of the subject.

12. The method of any of the previous claims, wherein said signal is used to gate a data acquisition by a system used for said diagnostic imaging procedure, or is used to sort, collate, select and/or annotate acquired image data by the diagnostic imaging system.

13. A device (50) for determining a signal indicative of a state of a subject during a diagnostic imaging or therapeutic procedure based on remote camera observation, the device comprising:
an input (51) for receiving camera images from a camera (52) configured to monitor a body part of the subject during the diagnostic imaging or therapeutic procedure via a reflection thereof in a reflective surface;
an image feature detector (53) for detecting a shape or contour of the reflective surface in at least one of the received camera images to define a region of interest in the image that contains image information corresponding to the body part of interest;
a segmenter (54) for segmenting the detected region of interest in at least one of the acquired camera images to select pixels or one or more regions in the region of interest that correspond to a feature of the body part of interest; and
a signal extractor (55) to determine the signal indicative of the state of the subject from the selected pixels or region.

14. A diagnostic imaging system (1) with an examination zone (11), the system comprising:
a camera (52) for acquiring images from a subject (13) when undergoing an examination while positioned in the examination zone,
a reflective surface (22), arranged in the examination zone, to reflect light onto the camera,
an image processor (27) for determining a signal indicative of a state of the subject during the examination from the acquired camera image or images, the image processor comprising a device (50) in accordance with claim 13.

15. A computer-program product for performing a method in accordance with any of the claims 1 to 12 when executed by a computing device.

## Patentansprüche

1. Computerimplementiertes Verfahren (100) zum Bestimmen eines Signals, das einen Zustand eines Probanden während einer diagnostischen Bildgebungsprozedur auf der Grundlage von Fernkamerabeobachtung anzeigt, wobei das Verfahren umfasst:
Erfassen (101) von Kamerabildern von einer Kamera, die so konfiguriert ist, dass sie einen Körperteil des Probanden während der diagnostischen Bildgebungsprozedur mittels einer Reflexion davon an einer reflektierenden Oberfläche überwacht;
Detektieren (102) einer Form oder Kontur der reflektierenden Oberfläche in mindestens einem der aufgenommenen Kamerabilder, um einen Bereich von Interesse im Bild zu definieren, der Bildinformationen enthält, die dem Körperteil von Interesse entsprechen;
Segmentieren (103) des detektierten Bereichs von Interesse in mindestens einem der erfassten Kamerabilder, um Pixel oder einen oder mehrere Bereiche im Bereich von Interesse auszuwählen, die einem Merkmal des Körperteils von Interessenentsprechen; und
Bestimmen (105) des Signals, das den Zustand des Probanden aus den ausgewählten Pixeln oder Bereichen anzeigt.

2. Verfahren nach Anspruch 1, wobei die Kamera so konfiguriert ist, dass sie einen Körperteil des Probanden während der diagnostischen Bildgebungsprozedur mittels einer Reflexion davon an einer reflektierenden Oberfläche überwacht; und wobei das Detektieren (102) der Form oder Kontur der reflektierenden Oberfläche eine Suche in mehreren Skalen unter Verwendung einer Vorlage der reflektierenden Oberfläche umfasst, bei der ein Maß der Übereinstimmung für eine Vielzahl verschiedener Kandidatenpositionen im Kamerabild und für eine Vielzahl verschiedener Skalen der Vorlage ausgewertet wird, um eine optimale Übereinstimmung der Vorlage in Übereinstimmung in Position und Skala mit dem Kamerabild zu ermitteln.

3. Verfahren nach Anspruch 2, wobei die Vorlage durch Aufnehmen eines Kalibrierungsbildes mit der Kamera, Beschneiden des Kalibrierungsbildes auf die Größe der reflektierenden Oberfläche im Bild und Anwenden eines hochfrequenten räumlichen Kernels zur Unterdrückung niederfrequenter Kontextanteile erstellt wird, wobei das Detektieren (102) Anwenden des hochfrequenten räumlichen Kernels auf das Kamerabild vor der Berechnung des Übereinstimmungsmaßes umfasst.

4. Verfahren nach einem der vorstehenden Ansprüche, wobei das Detektieren (102) ferner Informationen über die Positionierung des Probanden während der Prozedur berücksichtigt, die von einem diagnostischen Bildgebungssystem zur Durchführung der Prozedur bereitgestellt werden.

5. Verfahren nach einem der vorstehenden Ansprüche, wobei das Detektieren (102) den Bereich von Interesse definiert, der einen ersten Bildbereich umfasst, der von der Kontur der reflektierenden Oberfläche umschlossen wird, und optional auch einen zweiten Bildbereich, in dem das Körperteil von der Kamera direkt ohne Reflexion über die reflektierende Oberfläche beobachtet werden kann, indem eine vorbestimmte räumliche Beziehung des zweiten Bildbereichs zur reflektierenden Oberfläche verwendet wird.

6. Verfahren nach einem der vorstehenden Ansprüche, wobei die Segmentierung (103) Pixel im Kamerabild auf der Grundlage von Pixelintensität klassifiziert und/oder eine dynamische Veränderung von Pixelintensität in einer Sequenz von Kamerabildern analysiert, um zu bestimmen, ob ein Pixel oder ein Bildbereich dem Merkmal des Körperteils von Interesse entspricht.

7. Verfahren nach einem der vorstehenden Ansprüche, umfassend Bestimmen (104) der Bewegung des oder im Körperteil zwischen zu verschiedenen Zeitpunkten aufgenommenen Kamerabildern, wobei Pixel in dem Bereich von Interesse, für den eine Bewegung detektiert wird, von der durch die Segmentierung (103) bestimmten Auswahl ausgeschlossen werden, und/oder wobei die detektierte Bewegung dazu verwendet wird, die durch die Segmentierung auf der Grundlage eines zuvor aufgenommenen Bildes bestimmte Auswahl zu registrieren, um eine Positionsänderung und/oder andere räumliche Eigenschaften des Körperteils im Bild zu berücksichtigen, und/oder wobei die Segmentierung (103) und/oder Detektion reflektierender Oberflächen (102) erneut ausgeführt wird, wenn die detektierte Bewegung einen vorbestimmten Schwellenwert oder ein anderes Kriterium überschreitet, das eine Massenbewegung anzeigt.

8. Verfahren nach Anspruch 7, wobei die Bewegung durch einen optischen Flussalgorithmus bestimmt wird (104).

9. Verfahren nach einem der vorstehenden Ansprüche, wobei die diagnosistische Prozedur Bildgebung des Probanden mittels Magnetresonanztomographie, Computertomographie oder Positronenemissionstomographie und/oder Einzelphotonen-Emissionscomputertomographie umfasst.

10. Verfahren nach einem der vorstehenden Ansprüche, wobei das Körperteil das Gesicht oder einen Teil davon umfasst.

11. Verfahren nach einem der vorstehenden Ansprüche, wobei das Signal eine Herz-, Herz-Kreislauf- und/oder Atemfunktion des Probanden anzeigt, ein photoplethysmographisches Signal ist oder ein anderes Signal ist, das einen physiologischen Zustand und/oder Parameter des Probanden anzeigt.

12. Verfahren nach einem der vorstehenden Ansprüche, wobei das Signal verwendet wird, um die Datenerfassung durch ein System, das für die diagnostische Bildgebungsprozedur verwendet wird, zu steuern, oder zum Sortieren, Zusammenstellen, Auswählen und/oder Annotieren von vom diagnostischen Bildgebungssystem erfassten Bilddaten verwendet wird.

13. Vorrichtung (50) zur Bestimmung eines Signals, das einen Zustand eines Probanden während einer diagnostischen Bildgebungs- oder Therapieprozedur auf der Grundlage von Fernkamerabeobachtung anzeigt, wobei die Vorrichtung umfasst:
einen Eingang (51) zum Empfangen von Kamerabildern von einer Kamera (52), die so konfiguriert ist, dass sie einen Körperteil des Probanden während der diagnostischen Bildgebungs- oder Therapieprozedur mittels einer Reflexion davon an einer reflektierenden Oberfläche überwacht;
einen Bildmerkmaldetektor (53) zum Detektieren einer Form oder Kontur der reflektierenden Oberfläche in mindestens einem der empfangenen Kamerabilder, um einen Bereich von Interesse im Bild zu definieren, das Bildinformationen enthält, die dem Körperteil von Interesse entsprechen;
einen Segmentierer (54) zum Segmentieren des detektierten Bereichs von Interesse in mindestens einem der aufgenommenen Kamerabilder, um Pixel oder einen oder mehrere Bereiche im Bereich von Interesse auszuwählen, die einem Merkmal des Körperteils von Interesse entsprechen; und
einen Signalextraktor (55) zum Bestimmen des Signals, das den Zustand des Probanden anzeigt, aus den ausgewählten Pixeln oder Bereichen.

14. Diagnostisches Bildgebungssystem (1) mit einer Untersuchungszone (11), wobei das System umfasst:
eine Kamera (52) zur Aufnahme von Bildern eines Probanden (13) während einer Untersuchung, während er im im Untersuchungsbereich positioniert ist,
eine reflektierende Oberfläche (22), die in der Untersuchungszone angeordnet ist, um Licht auf die Kamera zu reflektieren.
einen Bildprozessor (27) zum Bestimmen eines Signals, das den Zustand des Probanden während der Untersuchung anzeigt, aus dem aufgenommenen Kamerabild oder den aufgenommenen Bildern, wobei der Bildprozessor eine Vorrichtung (50) nach Anspruch 13 umfasst.

15. Computerprogrammprodukt zum Durchführen eines Verfahrens nach einem der Ansprüche 1 bis 12, wenn es von einer Computervorrichtung ausgeführt wird.

## Revendications

1. Procédé mis en œuvre par ordinateur (100) pour déterminer un signal indicatif d'un état d'un sujet au cours d'une procédure d'imagerie diagnostique basée sur l'observation par caméra à distance, le procédé comprenant :
l'acquisition (101) d'images de caméra à partir d'une caméra configurée pour surveiller une partie de corps du sujet pendant la procédure d'imagerie diagnostique via une réflexion de celle-ci dans une surface réfléchissante ;
la détection (102) d'une forme ou d'un contour de la surface réfléchissante dans au moins une des images de la caméra acquises pour définir une région d'intérêt dans l'image qui contient des informations d'image correspondant à la partie du corps d'intérêt ;
la segmentation (103) de la région d'intérêt détectée dans au moins une des images de caméra acquises pour sélectionner des pixels ou une ou plusieurs régions de la région d'intérêt qui correspondent à une caractéristique de la partie du corps d'intérêt ; et
la détermination (105) du signal indicatif de l'état du sujet à partir des pixels ou de la région sélectionnés.

2. Procédé selon la revendication 1, dans lequel la caméra est configurée pour surveiller une partie du corps du sujet pendant la procédure d'imagerie diagnostique via une réflexion de celle-ci dans une surface réfléchissante ; et dans lequel ladite détection (102) de la forme ou du contour de la surface réfléchissante comprend une recherche multi-échelle utilisant un modèle de la surface réfléchissante, dans laquelle une mesure de correspondance est évaluée pour une pluralité de positions candidates différentes dans l'image de caméra et pour une pluralité d'échelles différentes du modèle pour identifier une correspondance optimale en position et en échelle du modèle à l'image de caméra.

3. Procédé selon la revendication 2, dans lequel ledit modèle est construit en acquérant une image d'étalonnage à l'aide de la caméra, en recadrant l'image d'étalonnage à la taille de la surface réfléchissante dans l'image et en appliquant un noyau spatial haute fréquence pour supprimer le contexte basse fréquence, dans lequel ladite détection (102) comprend l'application dudit noyau spatial haute fréquence à l'image de la caméra avant de calculer ladite mesure de correspondance.

4. Procédé selon l'une quelconque des revendications précédentes, dans lequel ladite détection (102) prend en outre en compte des informations relatives au positionnement du sujet pendant la procédure, telles que fournies par un système d'imagerie diagnostique utilisé pour réaliser ladite procédure.

5. Procédé selon l'une quelconque des revendications précédentes, dans lequel ladite détection (102) définit ladite région d'intérêt comprenant une première zone d'image délimitée par le contour de la surface réfléchissante et, facultativement, également une seconde zone d'image où la partie du corps est directement observable par la caméra sans réflexion via la surface réfléchissante en utilisant une relation spatiale prédéterminée de ladite seconde zone d'image par rapport à la surface réfléchissante.

6. Procédé selon l'une quelconque des revendications précédentes, dans lequel ladite segmentation (103) classe des pixels de l'image de caméra sur la base de l'intensité des pixels et/ou analyse une variation dynamique de l'intensité des pixels dans une séquence des images de caméra pour déterminer si une région de pixel ou d'image correspond à la caractéristique de la partie du corps d'intérêt.

7. Procédé selon l'une quelconque des revendications précédentes, comprenant la détermination (104) du mouvement de ou dans la partie du corps entre des images de caméra acquises à différents moments, dans lequel des pixels de la région d'intérêt pour laquelle un mouvement est détecté sont exclus de la sélection déterminée par la segmentation (103) et/ou dans lequel ledit mouvement détecté est utilisé pour enregistrer la sélection déterminée par la segmentation sur la base d'une image acquise précédemment pour tenir compte d'un changement de position et/ou d'autres propriétés spatiales de la partie du corps dans l'image et/ou dans lequel la segmentation (103) et/ou la détection de surface réfléchissante (102) sont exécutées à nouveau lorsque le mouvement détecté dépasse un seuil prédéterminé ou un autre critère indicatif d'un mouvement de masse.

8. Procédé selon la revendication 7, dans lequel ledit mouvement est déterminé (104) par un algorithme de flux optique.

9. Procédé selon l'une quelconque des revendications précédentes, dans lequel ladite procédure diagnostique comprend l'imagerie du sujet par imagerie par résonance magnétique, tomodensitométrie, tomographie par émission de positons et/ou tomographie par émission monophotonique.

10. Procédé selon l'une quelconque des revendications précédentes, dans lequel ladite partie du corps comprend le visage ou une partie de celui-ci.

11. Procédé selon l'une quelconque des revendications précédentes, dans lequel ledit signal est indicatif d'une fonction cardiaque, cardiovasculaire et/ou respiratoire du sujet, est un signal de photopléthysmographie ou est un autre signal indicatif d'un état physiologique et/ou d'un paramètre du sujet.

12. Procédé selon l'une quelconque des revendications précédentes, dans lequel ledit signal est utilisé pour déclencher une acquisition de données par un système utilisé pour ladite procédure d'imagerie diagnostique ou est utilisé pour trier, rassembler, sélectionner et/ou annoter des données d'images acquises par le système d'imagerie diagnostique.

13. Dispositif (50) pour déterminer un signal indicatif d'un état d'un sujet pendant une procédure d'imagerie diagnostique ou thérapeutique sur la base de l'observation à distance par caméra, le dispositif comprenant :
une entrée (51) pour recevoir des images de caméra provenant d'une caméra (52) configurée pour surveiller une partie du corps du sujet pendant l'imagerie diagnostique ou la procédure thérapeutique via une réflexion de celle-ci dans une surface réfléchissante ;
un détecteur de caractéristiques d'image (53) pour détecter une forme ou un contour de la surface réfléchissante dans au moins une des images de caméra reçues pour définir une région d'intérêt dans l'image qui contient des informations d'image correspondant à la partie du corps d'intérêt ;
un segmentateur (54) pour segmenter la région d'intérêt détectée dans au moins une des images de caméra acquises pour sélectionner des pixels ou une ou plusieurs régions dans la région d'intérêt qui correspondent à une caractéristique de la partie du corps d'intérêt ; et
un extracteur de signal (55) pour déterminer le signal indicatif de l'état du sujet à partir des pixels ou de la région sélectionnés.

14. Système d'imagerie diagnostique (1) avec une zone d'examen (11), le système comprenant :
une caméra (52) pour acquérir des images d'un sujet (13) lors d'un examen alors qu'il est positionné dans la zone d'examen,
une surface réfléchissante (22), disposée dans la zone d'examen, pour réfléchir la lumière sur la caméra,
un processeur d'images (27) pour déterminer un signal indicatif d'un état du sujet pendant l'examen à partir de l'image ou des images de caméra acquises, le processeur d'images comprenant un dispositif (50) conformément à la revendication 13.

15. Produit de programme informatique pour réaliser un procédé selon l'une quelconque des revendications 1 à 12 lorsqu'il est exécuté par un dispositif informatique.
